Europäisches Patentamt

European Patent Office

Office européen des brevets

(11) Publication number: **0 445 857 A1**

# EUROPEAN PATENT APPLICATION

(21) Application number: 91200337.3

(22) Date of filing: 15.02.91

(51) Int. Cl.⁵: **A23C 15/16**, A23D 7/00

(30) Priority: 16.02.90 NL 9000379

(43) Date of publication of application:
11.09.91 Bulletin 91/37

(84) Designated Contracting States:
BE DE DK FR GB IT NL SE

(71) Applicant: CAMPINA MELKUNIE B.V.
Europalaan 6a
NL-5232 BC 's-Hertogenbosch(NL)

(72) Inventor: Spaargaren, Annemarie
Puthof 30
NL-5655 AN Eindhoven(NL)
Inventor: Verdaasdonk, Jos
Begijnenakker 33
NL-4841 CK Prinsenbeek(NL)

(74) Representative: Smulders, Theodorus A.H.J.,
Ir. et al
Vereenigde Octrooibureaux Nieuwe Parklaan
107
NL-2587 BP 's-Gravenhage(NL)

(54) A process for preparing low-calorie butter products and products obtained.

(57) The present invention relates to a process for preparing low-calory butter or low-fat margarine on the basis of a fat phase from butterfat or mixtures of butterfat and other fats and an acidified aqueous phase containing milk proteins and thickeners. The invention is characterized in that an aqueous phase is emulsified in butter obtained by phase reversal of cream or a mixture of cream and non-milk fat, said aqueous phase being obtained by mixing a pasteurized solution of milk protein and protein- or carbohydrate-containing thickeners including conventional preservatives and emulsifiers with a mixture of a lactic acid concentrate obtained by bacteriological acidification of a milk product with a flavour starter prepared by cultivation of a flavouring mixed culture of lactic acid bacteria in a milk product enriched with whey protein.

EP 0 445 857 A1

This invention relates to a process for preparing low-calory butter or low-fat margarine on the basis of a fat phase from butterfat or mixtures of butterfat and other fats and an acidified aqueous phase containing milk proteins and thickeners.

Such low-calory butter products have long since been known, e.g., a rule came into force in Germany on May 17, 1974, regulating the preparation of low-calory butter. According to this rule such a low-calory butter is made from cream or butter, by adding milk proteins prepared from skim milk, with an addition of a lactic acid bacterial culture and/or citric acid for controlling the pH, of carotene and/or common salt and/or gelatin and/or mono- and diglycerides of edible fatty acids. In the above rule the fat content of such a low-calory butter is fixed at 39.0-41.0 % by weight.

A low-calory butter is prepared by the techniques as known for the preparation of margarine and low-fat margarine. Such a process is disclosed in Dutch patent publication NL 177729. According to this publication a low-calory bread spread can be prepared with an aqueous phase composed of two separate solutions. The process comprises dissolving gelatin or Danish agar separately at a pH of 7-1 and making a solution of sodium caseinate, mixing both solutions while avoiding that the milk protein is exposed to a temperature above 40°C. The publication gives no indications with regard to the further operations particularly required to obtain a palatable low-fat margarine. The aqueous phase is mixed into the fat phase in a conventional manner, followed by cooling with scraped heat exchangers and crystallization.

It is a drawback of this process that the product only obtains the normal neutral taste of a margarine or low-fat margarine, also if the fat processed is real milk fat. The consumer spreading low-calory butter on a slice of bread is consuming only half the amount of butterfat he would consume when using butter. But he will of course wish to have a taste impression like in the consumption of butter and not the neutral taste he would expect of normal low-fat margarine. Only if the taste comes up to his expectations, he will be prepared to pay the price for the more expensive milk fat in the product, instead of the price of the mostly much cheaper margarine fats processed into a low-fat margarine.

It has now been found that a low-calory butter having an improved taste like that of butter is obtained if an aqueous phase is emulsified in butter obtained by phase reversal of cream or a mixture of cream and non-milk fat, said aqueous phase being obtained by mixing a pasteurized solution of milk protein and protein- or carbohydrate-containing thickeners including conventional preservatives and emulsifiers with a mixture of a lactic acid concentrate obtained by bacteriological acidification of a milk product with a flavour starter prepared by cultivation of a flavouring mixed culture of lactic acid bacteria in a milk product enriched with whey protein. Preferably, gelatin is used as thickener.

In connection with the stability of the taste of the product obtained it has been found very important that the solution of gelatin and caseinate is pasteurized together and the same applies to the mixture of lactic acid concentrate and flavour starter. Both if part of the aqueous phase is not pasteurized and if the aqueous phase is pasteurized as a whole, it turns out that no palatable and taste-stable low-calory butter can be obtained.

The total taste impression of the product is the result of a number of physical, physicochemical and chemical factors which are hard, or not as a whole, to characterize by means of a figure or a number of parameters. The stability of the taste impression is therefore influenced by a large number of factors, and it is not quite possible to say which of them are the most important to obtain the effect according to the invention.

The formation of diacetyl and precursors thereof will no doubt play an important part in the cultivation of the flavour culture, but also modification of milk protein and milk fat contributes to the taste impression. Especially the addition of whey protein proves to be significant to the taste impression contributed by the flavour culture, but in order to ensure that the flavour remains constant, it is sometimes desirable to stop the microbiological and the enzymatic activity by pasteurization. And this is accompanied by denaturation of the whey protein if heated without the presence of other proteins. But if also milk protein, which naturally consists mainly of casein and only in small part of whey protein, is present in the flavour starter mixed with the whey protein composition, this denaturation does not prove to result in undesirable precipitations. In particular, this proves to be the case if the flavour starter is prepared from a solution of milk products and whey products in such a ratio that the ratio between casein protein und whey protein is from 4:1 to 1:4.

Although the lactic acid bacteria in the flavour starter are capable of making lactic acid, it is to be preferred yet to add lactic acid as a concentrate in addition to the flavour starter. The same process, in which both a flavour starter and a lactic acid concentrate are added to a butter product, is known in the preparation of butter from sweet cream from which a non-acidified buttermilk is recovered plus a sweet butter still lacking flavour and a sour taste.

It has been found that aeration of a mixture of flavour concentrate and acid concentrate, before pasteurizing the mixture, has a positive effect on the taste development. It seems possible that flavour precursors are then converted into flavour components by oxidation with air-oxygen.

In the aqueous phase there may also be processed preservatives such as sorbic acid or potassium sorbate and emulsifiers such as lecithin or mono- and diglycerides as well as conventional colours, e.g., annatto or carotene. Also if in view of the consistency other thickeners, gums, starch and the like are processed into the product, these can preferably be co-processed with the solution of gelatin and caseinate.

The aqueous phase can be mixed into the fat phase in various manners, e.g., by kneading together both components in a butter churn or by pumping a sweet butter mass together with the aqueous phase through a static mixer. An excellent distribution of the aqueous phase into the fat phase can be obtained by means of an in-line mixer in a continuous process. If low-calory butter is prepared according to the above-described invention, it turns out that the resulting product, after packaging into, e.g., paper wrappers or plastic tubs, has a good shelf life, if the product is stored at a temperature of 6-8° C. Then the taste and flavour like that of a butter product prove to remain very stable for a period of 8 weeks and even longer.

The butter used for the low-calory butter according to the invention can be recovered by various well-known methods. Thus it is possible to condition and churn cream analogously to sweet butter without inclusion of air, but other churning systems may also be useful, provided the desired phase reversal in the cream takes place therein and a substantial portion of the aqueous phase in the cream is separated as buttermilk.

Although it is not disadvantageous if an aqueous phase is left in the form of a buttermilk residue or wash water in the butter, because actually about half of the low-calory butter product consists of an aqueous phase, it is indeed important that in the mixing step that aqueous phase is mixed sufficiently with the added aqueous phase and that the amount thereof is exactly known, so that the added aqueous phase can provide exactly the required final water content in the product.

Preferably, therefore, butter is made first under conditions optimal in the manufacture of butter and known to butter-makers, before adding the aqueous phase.

In principle, it will be clear to those skilled in the art that the process described can also be used in the manufacture of low-fat margarine products by co-emulsifying non-milk fats in the cream before churning. This may be done to reduce the cost price of the product by processing cheap raw materials, with the purpose of changing the fatty acid composition or influencing the physical properties of the product such as spreadability. The same may also be achieved to a certain extent by changing the ratio between gelatin and sodium caseinate or other milk proteins. When the product contains non-milk fats, and optionally also non-milk emulsifiers as mono- and diglycerides derived from other fats, it cannot be designated as low-calory butter, but in that case a low-fat margarine product is obtained having a taste resembling that of butter.

The invention will be further illustrated by the following example.

Example

A mixture of 9.5 kg milk with 0.5 kg whey protein concentrate (80 wt.% protein) was homogenized at a temperature of from 50 to 60° C by means of a high-pressure homogenizer adjusted to a pressure of 200 bar, to stabilize the protein and is then pasteurized.

At 21° C, 0.02% starter inoculation culture of the aromatic type bought from NIZO was added and incubated at 20° C for 17 hours. A mixture was made by means of a lactic acid concentrate obtained by bacteriological acidification, the pH being adjusted to 3.5, and then this flavour starter was aerated for half an hour by introducing air in the form of finely divided bubbles.

Subsequently, the flavour starter mixture was pasteurized at 75° C for 30 minutes.

Then it was stored at 4° C in cooled condition until use.

In 84 kg water 6 kg sodium caseinate blend and 2 kg gelatin as well as 1 kg lecithin and 0.2 kg potassium sorbate were successively dissolved, followed by pasteurization of the liquid at 70° C for 20 minutes.

Before use, it was cooled to 20° C, per 93 kg of this solution 7 kg of the flavour starter mixture cooled to 4° C were added.

In a continuous mixer an emulsion of this aqueous phase in butter, obtained by continuously preparing fresh sweet butter of 18-20° C, was made by passing butter and aqueous phase through the mixer in the weight ratio of about 1:1.

Using a scraped heat exchanger the emulsion was cooled to a temperature of about 6-8° C. The product wrapped in paper was tested immediately and after 8 weeks storage for taste, appearance and further properties such as firmness, spreadability etc. The product proved to give a pleasant taste impression, although not identical with that of butter, which is not surprising in view of the low fat content and the related lower degree of cooling when melting on the tongue. But yet the butter-like taste of the product was salient enough to distinguish this low-calory butter from conventional margarine and low-fat margarine products.

Also in firmness the product resembled butter clearly more than the soft-spreadable margarines and conventional low-fat margarines because when scraped with a knife it showed a typical "butter curl". Yet the product was much better spreadable than butter at refrigerator temperature. The poor spreadability of butter straight from the refrigerator is a point in which butter is very much at a disadvantage as compared to soft margarines and butter/vegetable fat blends made spreadable by means of vegetable oil.

The favourable properties of the mixture of butter and aqueous phase proved unchanged also at 8 weeks storage in the refrigerator if the conventional precautions for hygienically operating in the tests were considered.

Owing to the relatively high moisture content and the vulnerable type of fat there is a great risk of bacteriological deterioration in case of disturbance of the tests. A good homogeneous mixing together of the aqueous phase and the fat phase is of great importance in this respect so as to obtain the greatest possible effect of the preservative in the aqueous phase.

## Claims

1. A process for preparing low-calory butter or low-fat margarine on the basis of a fat phase from butterfat or mixtures of butterfat and other fats and an acidified aqueous phase containing milk proteins and thickeners, characterized in that an aqueous phase is emulsified in butter obtained by phase reversal of cream or a mixture of cream and non-milk fat, said aqueous phase being obtained by mixing a pasteurized solution of milk protein and protein- or carbohydrate-containing thickeners including conventional preservatives and emulsifiers with a mixture of a lactic acid concentrate obtained by bacteriological acidification of a milk product with a flavour starter prepared by cultivation of a flavouring mixed culture of lactic acid bacteria in a milk product enriched with whey protein.

2. A process according to claim 1, characterized by preparing a solution of milk protein and gelatin containing from 1 to 16 wt.% sodium caseinate and from 1 to 10 wt.% gelatin as well as conventional emulsifiers and preservatives, and pasteurizing said solution at a temperature above 68° C for at least 10 minutes, followed by mixing the pasteurized solution with a mixture of microbiologically obtained flavour starter with a lactic acid concentrate.

3. A process according to claim 2, characterized by using potassium sorbate as preservative.

4. A process according to claim 2, characterized by using lecithin as emulsifier.

5. A process according to claim 2, characterized in that, in addition to emulsifiers and preservatives, carotene or annatto is added as colour to the solution of milk protein and thickeners.

6. A process according to claim 2, characterized by using gelatin as thickener.

7. A process according to claim 1 or 2, characterized in that the flavour starter is prepared from a solution of milk products and whey products in such a ratio that the ratio between casein protein and whey protein is from 4:1 to 1:4.

8. A process according to claim 7, characterized in that the solution of milk products and whey products is pasteurized, inoculated with a flavouring mixed culture of lactic acid bacteria and incubated to obtain the acidity and formation of flavours desired for the manufacture of butter and butter products.

9. A process according to any of the preceding claims, characterized in that a lactic acid concentrate obtained from a permeate recovered by ultrafiltration of milk or sweet whey, said permeate being acidified by inoculating with a culture of lactic acid bacteria and incubating to obtain the desired acidity and then being or not being concentrated further, as defined in claim 7 or 8, followed by pasteurizing the mixture at a temperature above 70° C for a period of at least 15 minutes.

10. A process according to claim 9, characterized by aerating the mixture of a lactic acid concentrate and a flavour starter for 10 minutes to 2 hours by passing air or an oxygen-containing gaseous mixture at a temperature of from 10° C to 30° C, before pasteurizing the mixture.

11. A process according to claim 9, characterized in that the mixture of lactic acid concentrate and flavour starter has a pH below 4.0 when the pasteurization begins.

12. A process according to claim 11, characterized in that the pH is 3.5 when the pasteurization begins.

13. A low-calory butter or low-fat margarine, obtained using the process according to any of the preceding claims and packaging the resulting product.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 652 558 (STICHTING BEDRIJVEN VAN HET NEDERLANDS ZUIVELONDERZOEK EDE)<br>* Claims 1-5; pages 10-13 * | 1,8,13 | A 23 C 15/16<br>A 23 D 7/00 |
| A | VOEDINGSMIDDELENTECHNOLOGIE, vol. 10, no. 43, 1977, pages 18-21; G. VAN DEN BERG et al.: "Een alternatieve bereidingswijze voor zure boter II. Een modificatie voor snellere aromavorming"<br>* Page 21, column 3 * | 1,8,9,10 | |
| A | US-A-3 397 994 (G. ELENBOGEN)<br>* Examples II,III; column 4, lines 44-46 * | 1,3,5 | |
| A | THE AUSTRALIAN JOURNAL OF DAIRY TECHNOLOGY, vol. 30, no. 3, September 1975, pages 117-119; F. LANG et al.: "Some major new European developments in dairy products' processing and packaging"<br>* Page 118, column 2 * | 1,5,6,13 | |
| A | DE-A-2 033 386 (SOC. DES PRODUITS NESTLE) | | |
| A | CA-A-1 074 176 (SILVERWOOD INDUSTRIES)<br>* Example I * | 2,3,4,6 | TECHNICAL FIELDS SEARCHED (Int. Cl.5)<br><br>A 23 C<br>A 23 D |
| A | FR-A-2 261 713 (UNILEVER) | | |
| A | WO-A-8 300 005 (ALFA-LAVAL) | | |
| P,A | EP-A-0 365 738 (WATERFORD CO-OPERATIVE DAIRY AND TRADING SOCIETY LTD)<br>* Claims 1-8; example 1 * | 1,3,6,13 | |

The present search report has been drawn up for all claims

| Place of search | Date of completion of search | Examiner |
|---|---|---|
| The Hague | 03 June 91 | DESMEDT G.R.A. |